# EUROPEAN PATENT APPLICATION

(11) **EP 1 997 854 A1**
(43) Date of publication of application: **03.12.2008**
(21) Application number: 07738397.4
(22) Date of filing: 13.03.2007
(51) Int. Cl.: C08L 101/00, C08L 51/00, C08L 101/14, C08F 265/06

(54) **THERMOPLASTIC RESIN COMPOSITION**

(30) Priority: 16.03.2006 JP 2006072815; 16.03.2006 JP 2006072814
(71) Applicant: Kaneka Corporation, Kita-ku Osaka-shi, Osaka 530-8288 (JP)
(72) Inventor: MATSUOKA, Yoshiaki, Takasago-shi, Hyogo 676-0026 (JP); TERADA, Toru, Takasago-shi, Hyogo 676-0023 (JP); YAMADA, Hirotsugu, Kobe-shi, Hyogo 655-0872 (JP); SATO, Mitsutaka, Akashi-shi, Hyogo 673-0878 (JP)
(74) Representative: Vossius & Partner
(86) International application number: PCT/JP2007/054925
(87) International publication number: WO 2007/105717

(57) **Abstract**

A thermoplastic resin composition having excellent weather resistance and high impact resistance in the present invention is the thermoplastic resin composition containing 100 parts by weight of a thermoplastic resin (A) and 0.5 to 20 parts by weight of a graft copolymer (B), wherein the graft copolymer (B) consists of 50% to 99.5% by weight of a core (bc) and 0.5% to 50% by weight of a non-crosslinked shell (bs), the core (bc) is constituted of only layer having a glass transition temperature of 20°C or lower, and the non-crosslinked shell (bs) is obtained by polymerizing a monomer mixture for non-crosslinked shell, containing 52% to 100% by weight of an acrylic ester and 0% to 48% by weight of a vinyl monomer copolymerizable with the acrylic ester.

## Description

### Technical Field

The present invention relates to a thermoplastic resin composition containing a thermoplastic resin and a graft copolymer, and capable of exhibiting excellent weather resistance and high impact resistance.

### Background Art

Improving impact resistance of resin materials makes it possible to, for example, spread uses, decrease thickness of molded articles, or increase a size of molded articles, and is therefore very industrially useful, and various investigations have conventionally been made. To improve impact resistance of a thermoplastic resin, adding a graft copolymer to the thermoplastic resin has conventionally been widely utilized. For example, in the case of vinyl chloride-based resins, it is known to compound a graft copolymer obtained by graft polymerizing various monomers onto a diene-based or acrylate-based rubber.

However, when the diene-based graft copolymer is compounded with the thermoplastic resin, impact resistance is improved, but weather resistance is poor. Therefore, in the case that its molded articles are used outdoor, there is the disadvantage that the impact resistance significantly deteriorates. For this reason, graft copolymers mainly comprising alkyl (meth)acrylates having excellent weather resistance are proposed as impact modifiers for outdoor use.

In general, (meth)acrylate-based rubbers have small effect for improving impact resistance as compared with diene-based rubbers, and therefore, the amount to be compounded with a thermoplastic resin is required to be increased. However, in the field improving impact resistance of thermoplastic resins, the compounding amount of the graft copolymer as the impact modifier is desired to be decreased as possible from quality standpoint or cost standpoint, and investigations for improving this point have been carried out over many years.

Methods for increasing an effect for imparting impact resistance to thermoplastic resins by the graft copolymer are variously known. Above all, a method for improving quality and quantity of a rubber component in the graft copolymer, such as decreasing a glass transition temperature of the (meth)acrylate-based rubber in the graft copolymer or increasing a weight ratio of the (meth)acrylate-based rubber in the graft copolymer, is known to be effective in its object.

Furthermore, a method for compounding an impact modifier having a layer structure wherein a glass transition temperature of a polymer constituting an outermost layer is 0°C or lower, a glass transition temperature of a polymer constituting a second layer counted from the outermost layer is 60°C or higher and a glass transition temperature of a polymer constituting a third layer counted from the outermost layer is 0°C or lower, with a thermoplastic resin is proposed as a method for increasing an effect for improving impact resistance of the thermoplastic resin under mold processing conditions at relatively low temperatures (e.g., see Patent Document 1). However, the method of Patent Document 1 requires to increase a weight ratio of the layer having the glass transition temperature of 60°C or higher from the standpoint of processability, and as a result, an effect for improving impact resistance is decreased. Thus, the method had the problem to be difficult to say to be satisfactory method.

On the other hand, a method of adding a high molecular weight polyanion having carboxyl groups and/or hydroxyl groups in the molecule to a rubber latex and adding dropwise the resulting mixed latex to an aqueous solution containing at least one kind of alkaline earth metals is known as a method for recovering a sticky rubbery polymer latex as a resin powder having less stickiness (e.g., see Patent Document 2). However, Patent Document 2 describes that this method cannot suppress stickiness of the recovered resin powder unless the high molecular weight polyanion is added in an amount of at least 2 to 8 parts by weight, and preferably 4 to 6 parts by weight, per 100 parts by weight of a rubber solid content in the rubber latex. In general, the assumption can easily be made that when foreign matters (that is, the high molecular weight polyanion in this case) are added to the polymer latex in an amount of 4 parts by weight or more, the recovered polymer composition itself usable in various purposes decreases its inherent quality. In particular, in the purpose of imparting impact resistance to thermoplastic resins and the like, the technique is applied to an impact modifier being desired to reduce the compounding amount as possible, deterioration of quality such as an effect for impacting impact resistance is unavoidable. From this fact, the method is difficult to say to be a satisfactory method.

That is, the current situation is that development of a thermoplastic resin composition capable of satisfying contradictory properties between improvement in impact resistance, and deterioration of processability and quality or cost rise, by the addition of the impact modifier is still expected.
Patent Document 1: Japanese Patent Laid-Open Publication No.6-122827
Patent Document 2: Japanese Patent Laid-Open Publication No.52-37987

### Disclosure of the Invention

### Problems to Be Solved by the Invention

The present invention has an object to provide a novel thermoplastic resin composition having excellent weather resistance and high impact resistance.

### Means for Solving the Problems

As a results of earnest investigations to solve the above problems, the present inventors have found that a thermoplastic resin composition capable of exhibiting excellent impact resistance can be obtained when a graft copolymer obtained by graft polymerizing 0.5% to 50% by weight of a non-crosslinked shell having specific composition onto 50% to 99.5% by weight of a rubbery polymer core in which a glass transition temperature of all layers is 20°C or lower is compounded with a thermoplastic resin, and have reached to complete the present invention.

That is, the present invention relates to a thermoplastic resin composition containing 100 parts by weight of a thermoplastic resin (A) and 0.5 to 20 parts by weight of a graft copolymer (B) , wherein the graft copolymer (B) consists of only 50% to 99.5% by weight of a core (bc) and 0.5% to 50% by weight of a non-crosslinked shell (bs), the core (bc) is constituted of only layer having a glass transition temperature of 20°C or lower, and the non-crosslinked shell (bs) is obtained by polymerizing a monomer mixture for non-crosslinked shell, containing 52% to 100% by weight of an acrylic ester and 0% to 48% by weight of a vinyl monomer copolymerizable with the acrylic ester.

The preferred embodiment is the thermoplastic resin composition wherein the core (bc) is obtained by polymerizing a monomer mixture for core consisting of 45% to 99.9% by weight of a (meth)acrylic ester, 0% to 54.9% by weight of a vinyl monomer copolymerizable with the (meth) acrylic ester, and 0.1% to 10% by weight of a polyfunctional monomer.

The preferred embodiment is the thermoplastic resin composition wherein the monomer mixture for non-crosslinked shell consists of 52% to 100% by weight of an acrylic ester, and 0% to 48% by weight of a vinyl monomer copolymerizable with the acrylic ester.

The preferred embodiment is the thermoplastic resin composition wherein the monomer mixture for non-crosslinked shell consists of 52% to 95% by weight of an acrylic ester, and 5% to 48% by weight of a vinyl monomer copolymerizable with the acrylic ester.

The preferred embodiment is the thermoplastic resin composition containing an aqueous polymer compound (C) having property to form a physical gel, in an amount of 0.01 to 3.0 parts by weight per 100 parts by weight of the graft copolymer (B).

The preferred embodiment is the thermoplastic resin composition wherein the aqueous polymer compound (C) is at least one or more selected from hydroxyethylmethyl cellulose, hydroxypropylmethyl cellulose, carboxymethyl cellulose, aqueous alginic acid derivatives, agar, gelatin, carrageenan, glucomannan, pectin, curdlan, gellan gum and polyacrylic acid derivatives.

The preferred embodiment is the thermoplastic resin composition wherein the aqueous polymer compound (C) is aqueous alginic acid derivatives.

### Advantage of the Invention

The thermoplastic resin composition of the present invention can exhibit excellent weather resistance and high impact resistance.

### Best Mode for Carrying Out the Invention

In the present description, unless otherwise indicated, (meth)acryl means acryl and/or methacryl.

### (Exemplification of thermoplastic resin (A))

The thermoplastic resin (s) (A) in the present invention is (are) not particularly limited, and can use the conventional thermoplastic resins. Specifically, vinyl chloride-based resins, (meth)acrylic-based resins, styrenic-based resins, carbonate-based resins, amide-based resins, ester-based resins, olefinic-based resins, ABS (acrylonitrile-butadiene-styrene)-based resins and the like can preferably be used.

Above all, the graft copolymer(s) (B) in the present invention can exhibit excellent effect particularly in the case of using as impact modifiers of vinyl chloride-based resins. From this fact, the thermoplastic resin(s) (A) is (are) particularly preferably vinyl chloride-based resins. In the present invention, the vinyl chloride-based resins mean a vinyl chloride homopolymer or copolymers containing at least 50% by weight or more, and preferably 70% by weight or more, of units derived from vinyl chloride, and examples of a monomer copolymerizable with a vinyl chloride monomer include vinyl acetate, propylene, styrene, (meth)acrylic ester, acrylonitrile, vinylidene chloride, and the like. Those may be used alone or as mixtures of two or more thereof.

### (Constitution of graft copolymer (B))

The graft copolymer(s) (B) in the present invention is (are) core-shell graft copolymers in which a non-crosslinked shell (bs) is grafted onto a core (bc) at least partially, and preferably over the entire surface, and comprising 50% to 99.5% by weight of the core (bc) and 0.5% to 50% by weight of the non-crosslinked shell (bs) when the total of the core (bc) and the shell (bs) is 100% by weight. When such the graft copolymer(s) (B) is(are) compounded with the thermoplastic resin (s) (A), thermoplastic resins capable of exhibiting high impact resistance and further preventing weather resistance and properties represented by surface gloss of molded articles from deterioration can be obtained.

### (Content of graft copolymer (B))

The content of the graft copolymer(s) (B) in the thermoplastic resin composition of the present invention is(are) not particularly limited. However, from quality standpoint and cost standpoint, the content is desirably 0.5 to 20 parts by weight, more preferably 0.5 to 10 parts by weight, and particularly preferably 1 to 7 parts by weight, per 100 parts by weight of the thermoplastic resin (s) (A). Where the content of the graft copolymer(s) (B) in the thermoplastic resin composition exceeds 20 parts by weight, an effect for improving impact resistance is sufficient, but there is the possibility that quality other than impact resistance is decreased, and there is the case that cost rises. On the other hand, where the content of the graft copolymer(s) (B) in the thermoplastic resin composition is less than 0. 5 part by weight, there is the case that sufficient effect for improving impact resistance is difficult to obtain.

### (Structure of graft copolymer (B))

Regarding layer structure of the graft copolymer(s) (B) of the present invention, for example, a layer structure in which the core (bc) is completely covered with the non-crosslinked shell (bs) is general, but there may be the case that the amount of a shell for forming layer structure is insufficient depending on weight proportion between the core (bc) and the non-crosslinked shell (bs), and the like. In such a case, the structure is not required to be a complete layer structure, and may be a structure in which a part of the core (bc) is covered with the non-crosslinked shell (bs). Alternatively, a structure in which at least a part of monomers as constituent elements of the non-crosslinked shell (bs) is graft polymerized onto a part of the core (bc) can preferably be used. The concept of the above layer structure can similarly be applied to the case that multilayered structures are formed in the core (bc) or in the non-crosslinked shell (bs) in the present invention.

### (Production method of graft copolymer (B))

The graft copolymer (s) (B) in the present invention can be produced according to the conventional methods. For example, the graft copolymer (s) can be produced by an emulsion polymerization method, a suspension polymerization method, a microsuspension polymerization method, a mini-emulsion polymerization method, an aqueous dispersion polymerization method and the like. Above all, a graft copolymer (s) produced by an emulsion polymerization method can preferably be used from the point that it is easy to control the structure. The general production method is described in detail in, for example, JP-A-2002-363372, JP-A-2003-119396 and JP-A-9-286830. However, the production methods are not limited to those.

### (Core (bc))

The core (bc) in the present invention is rubbery polymers having the glass transition temperature of 20°C or lower, and its structures are not particularly limited. The rubbery polymers forming the core (bc) may have a single layer structure or multilayered structures of two layers or more. Furthermore, a structure having a hollow portion in the inside, for example, can preferably be used from the standpoint of highly improving impact resistance, which is generally known that an effect for increasing degree of stress concentration is high. However, where the rubbery polymers forming the core (bc) have multilayered structures, the glass transition temperature of all of the layers contained in the core (bc) is required to be 20°C or lower, that is, the core (bc) is required to be rubbery polymers constituted of only layers each having a glass transition temperature of 20°C or lower. Where a layer having the glass transition temperature higher than 20°C exists in the core (bc), the effect for improving impact resistance tends to be decreased.

### (Measurement method of glass transition temperature)

The glass transition temperature (hereinafter referred to as Tg) of the polymers can be measured with, for example, differential scanning calorimeter. However, the present invention uses a value calculated by Fox formula using the date described in Polymer Hand Book (J. Brandrup, Interscience 1989) (e.g., Tg of polymethyl methacrylate is 105°C, Tg of polybutyl acrylate is -54°C, and Tg of poly 2-ethylhexyl acrylate is -50°C).

### (Weight proportion of core (bc))

The weight proportion of the core (bc) in the graft copolymer(s) (B) is 50% to 99.5% by weight, preferably 60% to 99.5% by weight, more preferably 70% to 97% by weight, and particularly preferably 80% to 97% by weight. Where the weight proportion of the core (bc) in the graft copolymer(s) (B) is less than 50% by weight, there is the case, for example, that it is difficult to obtain an effect for improving impact resistance when used as an impact modifier of thermoplastic resins such as vinyl chloride-based resins. Contrary to this, where the weight proportion of the core (bc) exceeds 99.5% by weight, there is the case that coarsening and agglomeration occur when particles of the graft copolymer (B) are recovered from an emulsion polymerization latex or a suspension polymerization slurry.

### (Volume average particle diameter of core (bc))

The volume average particle diameter of the core (bc) in the present invention is not particularly limited, but is preferably 0.05 µm to 0.5 µm, and more preferably 0.08 µm to 0.3 µm. Where the volume average particle diameter of the core (bc) in the graft copolymer(s) (B) exceeds 0.5 µm, there is the case that it is difficult to exhibit an effect for improving impact resistance, and additionally there is the possibility that quality such as surface gloss of molded articles molded using the thermoplastic resin compositions deteriorates. On the other hand, where the volume average particle diameter of the core (bc) in the graft copolymer(s) (B) is less than 0.05 µm, there is the case that it is difficult to exhibit an effect for improving impact resistance. The volume average particle diameter can be measured using, for example, MICROTRAC UPA150 (available from Nikkiso Co., Ltd.).

### (Composition of core (bc))

The composition of the core (bc) in the present invention is preferred to be poly(meth)acrylic ester-based rubbery polymers from the standpoint of weather resistance and the like. However, from the standpoint of quality represented by impact resistance of the thermoplastic resin compositions obtained, for example, crosslinked rubbery polymers obtained by polymerizing a monomer mixture for core comprising 45% to 99.9% by weight of (meth)acrylic ester, 0% to 54.9% by weight of a vinyl monomer copolymerizable with the (meth)acrylic ester, and 0. 1% to 10% by weight of polyfunctional monomers (provided that the total is 100% by weight) is preferred.

### ((Meth)acrylic ester)

The amount of the (meth)acrylic ester in the monomer mixture for core is preferably 45% to 99.9% by weight. However, from the standpoint of weather resistance, the amount is more preferably 60% to 99.9% by weight, further preferably 70% to 99.9% by weight, and particularly preferably 80% to 99.9% by weight.

From the standpoint that impact resistance can highly be improved, examples of the (meth)acrylic ester include (meth)acrylic alkyl esters having an alkyl group having 1 to 22 carbon atoms such as methyl (meth)acrylate, ethyl (meth)acrylate, propyl (meth)acrylate, butyl (meth)acrylate, 2-ethylhexyl (meth)acrylate, octyl (meth)acrylate, dodecyl (meth)acrylate, stearyl (meth)acrylate or behenyl (meth)acrylate; (meth)acrylic esters having an alkyl group having 1 to 22 carbon atoms and further having a hydroxyl group, such as 2-hydroxyethyl (meth)acrylate or 4-hydroxybutyl (meth)acrylate; (meth)acrylic esters having an epoxy group, such as glycidyl (meth)acrylate; and (meth)acrylic esters having an alkyl group having 1 to 22 carbon atoms and further having an alkoxyl group. The carbon atom number of the alkyl group in the (meth)acrylic esters is not always limited. However, for example, where the carbon atom number exceeds 22, there is the case that polymerizability deteriorates. Therefore, (meth)acrylic esters having an alkyl group having 22 or less carbon atoms can preferably be used. Those may be used alone or as mixtures of two kinds or more thereof.

Above all, (meth)acrylic alkyl esters having an alkyl group having 12 or less carbon atoms, generally and widely used as a rubbery polymer core of (meth) acrylic ester-based impact modifiers can preferably be used. Specifically, (meth) acrylic alkyl esters having an alkyl group having 1 to 12 carbon atoms, (meth)acrylic esters having an alkyl group having 1 to 12 carbon atoms and further having a hydroxyl group, (meth) acrylic esters having an epoxy group and (meth)acrylic esters having an alkyl group having 1 to 12 carbon atoms and further having an alkoxyl group can preferably be used in the core (bc). Those may be used alone or as mixtures of two kinds or more thereof.

### (Vinyl monomer)

The amount of the vinyl monomer copolymerizable with the (meth)acrylic ester in the monomer mixture for core is preferably 0% to 54. 9% by weight or 0% to 54.8% by weight. From the standpoint of weather resistance, the amount is more preferably 0% to 39. 9% by weight, further preferably 0% to 29.9% by weight, and particularly preferably 0% to 19.9% by weight.

Examples of the vinyl monomer copolymerizable with the (meth)acrylic ester include aromatic vinyl compounds such as styrene, α-methylstyrene, monochlorostyrene or dichlorostyrene; vinyl cyanide compounds such as acrylonitrile or methacrylonitrile; vinylcarboxylic acids such as acrylic acid or methacrylic acid; vinyl halides such as vinyl chloride, vinyl bromide or chloroprene; and vinyl acetate. Above all, the aromatic vinyl compounds or the vinyl cyanide compounds are more preferred from the standpoint of processability of the thermoplastic resin compositions having the graft copolymer(s) (B) compounded therewith. Those may be used alone or as mixtures of two kinds or more thereof.

### (Polyfunctional monomer)

The amount of the polyfunctional monomer used in the monomer mixture for core is preferably 0.1% to 10% by weight. From the standpoint of improving impact resistance, the amount is more preferably 0.1% to 5% by weight, further preferably 0.1% to 3% by weight, and particularly preferably 0.2% to 3% by weight. Where the amount of the polyfunctional monomer used for forming the core (bc) exceeds 10% by weight, there is the case that it is difficult to exhibit an effect for improving impact resistance. On the other hand, where the amount of the polyfunctional monomer used for forming the core (bc) is less than 0.1% by weight, there is the possibility that the graft copolymer (s) (B) cannot maintain its shape during molding, and there is the case that it is difficult to exhibit an effect for improving impact resistance.

The polyfunctional monomer has a role of crosslinking agents introducing crosslinked structures into the core (bc), and further has a role of grafting agents supplying graft points in graft polymerizing the non-crosslinked shell (bs) onto the core (bc). Specific examples of the polyfunctional monomer include allyl methacrylate, diallyl phthalate, triallyl cyanurate, monoethylene glycol dimethacrylate, tetraethylene glycol dimethacrylate, divinylbenzene, 1,3-butylene glycol, dimethacrylate, and the like. Above all, allyl methacrylate is more preferred from the standpoint of the function as grafting agents. Those may be used alone or as mixtures of two kinds or more thereof.

### (Non-crosslinked shell (bs))

The non-crosslinked shell (bs) in the present invention is obtained by polymerizing a monomer mixture for non-crosslinked shell, containing 52% to 100% by weight of an acrylic ester, and 0% to 48% by weight of a vinyl monomer copolymerizable with the acrylic ester. The polymer forming the non-crosslinked shell (bs) may have only a single layer structure, or a multilayered structures of two layers or more.

### (Weight proportion of non-crosslinked shell (bs))

The weight proportion of the non-crosslinked shell (bs) in the graft copolymer(s) (B) is 0.5% to 50% by weight, preferably 0.5% to 40% by weight, more preferably 3% to 30% by weight, and particularly preferably 3% to 20% by weight. Where the weight proportion of the non-crosslinked shell (bs) in the graft copolymer(s) (B) exceeds 50% by weight, there is the case, for example, that it is difficult to obtain an effect for improving impact resistance when used as an impact modifier of thermoplastic resins such as vinyl chloride-based resins. Contrary to this, where the weight proportion of the non-crosslinked shell (bs) is less than 0.5% by weight, there is the case that coarsening and agglomeration occur when particles of the graft copolymer (s) (B) are recovered from an emulsion polymerization latex or a suspension polymerization slurry.

### (Composition of non-crosslinked shell (bs))

The monomer mixture for non-crosslinked shell is preferably a monomer mixture consisting of 52% to 100% by weight of an acrylic ester and 0% to 48% by weight of vinyl monomers copolymerizable with the acrylic ester (provided that the total is 100% by weight), and more preferably a monomer mixture comprising 52% to 97% by weight of an acrylic ester and 3% to 48% by weight of vinyl monomers copolymerizable with the acrylic ester, further preferably 52% to 95% by weight of an acrylic ester and 5% to 48% by weight of vinyl monomers copolymerizable with the acrylic ester, further preferably 52% to 90% by weight of an acrylic ester and 10% to 48% by weight of vinyl monomers copolymerizable with the acrylic ester, and further preferably 52% to 80% by weight of an acrylic ester and 20% to 48% by weight of vinyl monomers copolymerizable with the acrylic ester (provided that the total is 100% by weight).

Alternatively, the monomer mixture for non-crosslinked shell is a monomer mixture comprising 55% to 95% by weight of an acrylic ester and 5% to 45% by weight of vinyl monomers copolymerizable with the acrylic ester, further preferably 60% to 90% by weight of an acrylic ester and 10% to 40% by weight of vinyl monomers copolymerizable with the acrylic ester, further preferably 62% to 85% by weight of an acrylic ester and 15% to 38% by weight of vinyl monomers copolymerizable with the acrylic ester, and most preferably 65% to 85% by weight of an acrylic ester and 15% to 35% by weight of vinyl monomers copolymerizable with the acrylic ester (provided that the total is 100% by weight).

Furthermore, to particularly improve impact strength, it is effective to soften the shell by increasing acrylic esters having an alkyl group having 12 or less carbon atoms, generally and widely used in rubbery polymers of (meth)acrylic ester-based impact modifiers, to 52% to 85% by weight, preferably 65% to 85% by weight, and more preferably 75% to 85% by weight. Where the weight proportion of the acrylic esters in the shell is less than 52% by weight, there is the case, for example, that it is difficult to obtain an effect for improving impact resistance when used as an impact modifier of thermoplastic resins such as vinyl chloride resins. Contrary to this, where the weight proportion of the acrylic ester exceeds 85% by weight and the aqueous polymer compound (C) having property to form a physical gel is not contained, there is the case that coarsening and agglomeration occur when particles of the graft copolymer (s) (B) are recovered from an emulsion polymerization latex or a suspension polymerization slurry.

Moreover, where the aqueous polymer compound (C) having property to form a physical gel is contained in thermoplastic resin compositions, coarsening and agglomeration can be suppressed in recovering the graft copolymer(s) (B) even though the acrylic esters in the shell are increased, productivity can be maintained even though the acrylic esters in the shell are increased to 75% to 85% by weight, and high impact strength can be exhibited. Thus, such a case is particularly effective.

The acrylic esters and the vinyl monomers copolymerizable therewith may be used alone or as mixtures of two kinds or more thereof, respectively. However, to make the shell (bs) non-crosslinked, it is preferred that a polyfunctional vinyl monomers are not used.

### (Exemplification of acrylic ester of non-crosslinked shell (bs))

Examples of the acrylic esters used in the polymerization of the non-crosslinked shell (bs) include acrylic alkyl esters having an alkyl group having 1 to 22 carbon atoms, such as methyl acrylate, ethyl acrylate, propyl acrylate, butyl acrylate, 2-ethylhexyl acrylate, octyl acrylate, dodecyl acrylate, stearyl acrylate or behenyl acrylate; acrylic esters having an alkyl group having 1 to 22 carbon atoms and having a hydroxyl group, such as 2-hydroxyethyl acrylate or 4-hydroxybutyl acrylate; acrylic esters having an epoxy group, such as glycidyl acrylate; and acrylic esters having an alkyl group having 1 to 22 carbon atoms and having an alkoxyl group. The carbon atom number of the alkyl group in the acrylic esters is not always limited. However, for example, where the carbon atom number exceeds 22, there is the case that polymerizability deteriorates. Therefore, acrylic esters having an alkyl group having 22 or less carbon atoms are preferably used. Above all, acrylic alkyl esters having an alkyl group having 12 or less carbon atoms, generally and widely used as a rubbery polymer core of (meth)acrylic ester-based impact modifiers can preferably be used. Those may be used alone or as mixtures of two kinds or more thereof.

### (Exemplification of vinyl monomer of non-crosslinked shell (bs))

The vinyl-based monomers copolymerizable with the acrylic ester used in the non-crosslinked shell (bs) in the present invention are not particularly limited. For example, at least one monomer selected from methacrylic esters, aromatic vinyl compounds, vinyl cyanide compounds, vinyl carboxylic acids, vinyl halides and vinyl acetate can preferably be used. Examples of the aromatic vinyl compounds include styrene, α-methylstyrene, vinyltoluene, and the like. Examples of the methacrylic esters include methyl methacrylate, ethyl methacrylate, butyl methacrylate, 2-ethylhexyl methacrylate, dodecyl methacrylate, stearyl methacrylate, behenyl methacrylate, glycidyl methacrylate, and the like. Examples of the vinyl cyanide compounds include acrylonitrile and methacrylonitrile and the like. Examples of the vinyl carboxylic acids include acrylic acid and methacrylic acid and the like. Examples of the vinyl halides include vinyl chloride, vinyl bromide and chloroprene and the like. Those may be used alone or as mixtures of two kinds or more thereof. Of those, it is preferred to use the methacrylic esters from the standpoint of compatibility between vinyl chloride-based resins and the graft copolymer(s) (B) when the vinyl chloride-based resins are used as the thermoplastic resin (A).

### (Definition of aqueous polymer compound (C))

It is preferred in the composition of the present invention to contain the aqueous polymer compound (C) having property to form a physical gel in the thermoplastic resins (A) together with the graft copolymer(s) (B). The physical gel used herein means a gel by physical crosslinking formed by, for example, hydrogen bond or ionic bond between polymers, or chelate formation. Furthermore, "having the property to form a physical gel" means that change from viscous fluid (sol) to elastomer (gel) by the addition of a gelling agent(s) such as inorganic salts or acids to aqueous solutions of aqueous polymer compounds alone is visually recognized. In the present invention, the aqueous polymer compound (C) having property to form a physical gel is defined an aqueous polymer compound having the above property.

### (Exemplification of aqueous polymer compound (C))

The aqueous polymer compound (C) having property to form a physical gel, that can be used in the present invention is not particularly limited so long as it can exhibit the above property. For example, aqueous polymer compounds comprising one kind or a mixture of at least two kinds selected from the following groups can be used. For example, aqueous alginic acid derivatives such as alginic acid, sodium alginate, potassium alginate or ammonium alginate; hydroxylethyl methyl cellulose, hydroxypropyl methyl cellulose, carboxymethyl cellulose, agar, gelatin, carrageenan, glucomannan, pectin, curdlan, gellan gum and polyacrylic acid derivatives can be exemplified. In the present invention, among those, carboxymethyl cellulose, aqueous alginic acid derivatives or polyacrylic acid derivatives are more preferred in the sense of achieving its object. Above all, aqueous alginic acid derivatives are most preferably used.

The ratio between mannuronic acid and guluronic acid in the aqueous alginic acid derivatives is not particularly limited. However, there is the tendency that the ability for forming a physical gel is increased with the increase of the guluronic acid ratio, and this is preferred. The guluronic acid ratio in the aqueous alginic acid derivatives is generally 5% by weight or more, and more preferably 30% by weight or more. The molecular weight of the aqueous polymer compounds represented by the aqueous alginic acid derivatives is not particularly limited. However, viscosity of an aqueous solution in a concentration of 1.0% by weight measured with a B-type viscometer is preferably 2 to 22,000 mPa·s, and more preferably 2 to 1,000 mPa·s, from the point of liquid transfer property at the time of production.

### (Addition method)

A method for adding the aqueous polymer compound (C) having property to form a physical gel in the thermoplastic resin compositions of the present invention is effective to first compound the (C) with the graft copolymer (s) (B) and then compound the resulting mixture as an impact modifier with a thermoplastic resins. In particular, a method of adding the aqueous polymer compound (C) having property to form a physical gel to a latex of the graft copolymer(s) (B) and treating the resulting mixture is effective.

### (Content of aqueous polymer compound (C))

The content of the aqueous polymer compound (C) having property to form a physical gel in the present invention is preferably 0.01 to 3.0 parts by weight, and more preferably 0.05 to 1.8 parts by weight, per 100 parts by weight of the graft copolymer(s) (B). Where the content of the aqueous polymer compound (C) having property to form a physical gel is less than 0.01 part by weight, there is the tendency that coarsening or agglomeration is liable to occur when recovering the graft copolymer(s) (B) becoming as impact modifiers, and where the coarsened or agglomerated graft copolymers are present, there is the tendency that an effect for imparting impact resistance deteriorates. Contrary to this, the content of the aqueous polymer compound (C) having property to form a physical gel is more than 3.0 parts by weight, an effect for suppressing coarsening and agglomeration when recovering the graft copolymer (B) is improved, but a large amount of the aqueous polymer compound (including materials originated from this) remains in impact modifiers, and there is the tendency that an effect for imparting impact resistance and quality such as thermal stability at the time of mold processing deteriorate.

### (Exemplification of gelling agent)

It is preferred in the present invention to use a gelling agent (s) together with the aqueous polymer compound (C) having property to form a physical gel. More specifically, for example, the gelling agent is preferably added to a mixture of a latex of the graft copolymer(s) and the aqueous polymer compound (C) having property to form a physical gel when recovering the latex from the graft copolymer(s) (B).

As the gelling agent usable in the present invention, for example, inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum and iron alum; inorganic acids such as hydrochloric acid, sulfuric acid, nitric acid or phosphoric acid; organic acids such as acetic acid or formic acid; salts of organic acid, such as sodium acetate, calcium acetate, sodium formate or calcium formate can be used alone or as a mixture.

Of those, inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum and iron alum; inorganic acids such as hydrochloric acid, sulfuric acid, nitric acid or phosphoric acid; and organic acids such as acetic acid or formic acid can preferably be used alone or as a mixture.

In the present invention, when aqueous alginic acid derivatives are used as the aqueous polymer compound (C) having property to form a physical gel, calcium chloride, ferrous sulfate, ferrous chloride, ferric chloride, ferric sulfate, aluminum sulfate and the like can preferably be used as the gelling agent.

### (Addition amount of gelling agent)

The addition amount of the gelling agent is not particularly limited. Most of the gelling agent can be washed out by a water washing step at the time of recovery of the graft copolymers, and the gelling agent remains in an amount of preferably less than 1 part by weight, and more preferably 0.01 to 0.5 part by weight, per 100 parts by weight of the graft copolymer(s) (B). Where the residual amount of the gelling agent exceeds 1 part by weight per 100 parts by weight of the graft copolymer (s) (B), for example, there is the possibility that processability changes when compounded with a thermoplastic resin and molded, and there is the tendency that it is difficult to exhibit high impact resistance effect. In addition to those, the problem is likely to occur that molded articles color in yellow.

The use amount of the gelling agent at the time of recovery of the graft copolymer(s) (B) is not particularly limited so long as the residual amount of the gelling agent is less than 1 part by weight per 100 parts by weight of the graft copolymer (s) (B). However, from the standpoints of ease of recovery and production cost, the use amount is preferably 0.2 to 20 parts by weight, and more preferably 1 to 10 parts by weight, per 100 parts by weight of the graft copolymer(s) (B).

In the present invention, the purposes for containing the aqueous polymer compound (C) having property to form a physical gel preferably together with the gelling agent in the thermoplastic resin compositions of the present invention, or in impact modifiers containing the graft copolymer(s) (B) and the aqueous polymer compound (C) having property to form a physical gel are that:
(1) due to that non-sticky physical gel is co-present in coagulated particles of the graft copolymer(s) (B), anti-blocking property of the coagulated particles in the middle of recovery and form retention of the coagulated particles (imparting elasticity to the coagulated particles) are improved, and
(2) due to that a dried product of the non-sticky physical gel is co-present in the coagulated particles even after drying the coagulated particles of the graft copolymer(s) (B), anti-blocking property of the coagulated particles and form retention of the coagulated particles (imparting elasticity to coagulated particles) are improved, thereby coarsening and agglomeration can be suppressed.

### (Anti-caking agent)

Anti-caking agents can further be contained in the thermoplastic resins of the present invention so as to be added together with the graft copolymer(s) (B), for example, as a part of the impact modifier. Such the anti-caking agents are not particularly limited, but from the point that quality such as an effect for improving impact resistance and an effect of suppressing coarsening and agglomeration can be satisfied in higher level, for example, polyvalent metal salts of anionic surfactants and/or a silicon oil can preferably be used.

### (Additives)

According to need, additives such as antioxidants, thermal stabilizers, ultraviolet absorbers, pigments, antistatic agents, lubricants or processing aids can appropriately be added to the thermoplastic resin compositions of the present invention.

### (Production process of thermoplastic resin composition)

A process for preparing the thermoplastic resin compositions of the present invention is not particularly limited, and the conventional processes can be employed. For example, a process for obtaining a resin composition by previously mixing the thermoplastic resin (A), and a powder containing the graft copolymer(s) (B), the aqueous polymer compound (C) having property to form a physical gel, and the like, using Henschel mixer, tumbler and the like, and then melt kneading the resulting mixture using a single-screw extruder, a twin-screw extruder, Banbury mixer, a heating roll and the like can be employed.

### Examples

The present invention is described in more detail below on the basis of the Examples, but the invention is not limited to only such Examples.

### (Example 1)

### (Preparation of graft copolymer G1)

### <Preparation of core (bc)>

160 parts by weight of deionized water and 0.05 part by weight of sodium laurylsulfate were charged in a glass reactor equipped with a thermometer, a stirrer, a reflux condenser, a nitrogen stream inlet, an addition apparatus of monomers and an addition apparatus of an emulsifier, and temperature was risen to 50°C while stirring in nitrogen stream.

A mixture of 8.50 parts by weight of 2-ethylhexyl acrylate (hereinafter referred to as 2-EHA) and 0.04 part by weight of allyl methacrylate (hereinafter referred to as AMA) as a part of a monomer mixture for first layer which is a part of monomer mixtures for core, and 0.01 part by weight of cumene hydroperoxide was charged through the addition apparatus. Ten minutes later, a mixed solution of 0.01 part by weight of sodium ethylenediamine tetraacetate and 0.005 part by weight of ferrous sulfate·heptahydrated salt dissolved in 5 parts by weight of distilled water, and 0.2 part by weight of sodium formaldehyde sulfoxylate were charged.

After stirring for 1 hour in such a state, a mixture comprising 4.93 parts by weight of 2-EHA and 0. 03 part by weight of AMA as the remainder of the monomer mixture for first layer which is a part of the monomer mixtures for core, and 0.01 part by weight of cumene hydroperoxide was added dropwise thereto over 30 minutes. Thus, a first layer of a core (bc) of the graft copolymer G1 was polymerized.

After stirring for 1 hour in such a state, a mixture comprising 76.12 parts by weight of butyl acrylate (hereinafter referred to as BA) and 0.38 part by weight of AMA as a monomer mixture for second layer which is a part of monomer mixtures for core, and 0.1 part by weight of cumene hydroperoxide was added dropwise thereto over 5 hours.
Simultaneously, 1 part by weight of sodium laurylsulfate in a form of a 5 wt% aqueous solution was continuously added over 5 hours while adding dropwise the above mixtures.

Stirring was further continued for 1.5 hours, and an acrylate-based rubbery polymer having a volume average particle diameter of 0.14 µm, having two layers comprising a first layer having a glass transition temperature of -50°C and a second layer having a glass transition temperature of -54°C was obtained as a core (bc).

### <Preparation of shell (bs)>

A mixture of 4.00 parts by weight of methyl methacrylate (hereinafter referred to as MMA), 6.00 parts by weight of BA, as a monomer mixture for non-crosslinked shell and 0.01 part by weight of cumene hydroperoxide was continuously added to the acrylate-based rubbery polymer at 50°C over 1 hour. After completion of the addition of the mixture, 0.01 part by weight of cumene hydroperoxide was added, and stirring was further continued for 1 hour to complete polymerization. In this case, the polymerization conversion of monomer components was 99.2%. Thus, a latex of the graft copolymer G1 comprising 90% by weight of the core (bc) and 10% by weight of a non-crosslinked shell (bs) was obtained.

### <Preparation of white resin powder of graft copolymer G1>

The latex (polymer solid content: 100 parts by weight) of the graft copolymer G1 at 5°C was atomized under an atomizing pressure of 3.7 kg/cm² to a position of a height of 5 m from a liquid level of a tower bottom in a cylindrical apparatus having a diameter of 60 cm using a spiral flow conical nozzle (nozzle diameter 0.6 mm) which is one kind of a pressure nozzle such that a volume average droplet diameter was a droplet of about 200 µm. At the same time, a 30 wt% calcium chloride aqueous solution was atomized while mixing with air with a two fluid nozzle such that the calcium chloride solid content is 5 to 15 parts by weight per 100 parts by weight of the solid content of the graft polymer G1 and the droplet diameter is 0.1 to 10 µm. Latex droplets of the graft copolymer G1 fallen in the tower were recovered as an aqueous solution containing coagulated latex particles by a receiving tank filled with a 1.0 wt% calcium chloride aqueous solution at 5°C.

A 5 wt% potassium palmitate aqueous solution was added to the thus-obtained aqueous solution containing coagulated latex particles such that potassium palmitate solid content is 1.5 parts by weight per 100 parts by weight of the solid content of the graft copolymer G1. The resulting mixture was heat treated, followed by dehydration and drying, thereby preparing a white resin powder of the graft copolymer G1.

### (Preparation of thermoplastic resin composition, preparation of molded article, and evaluation)

100 parts by weight of a vinyl chloride-based resin (KANEVINYL S-1001, available from Kaneka Corporation, average degree of polymerization: 1,000), 4.5 parts by weight of a lead-based one-pack stabilizer (LGC3203, available from ACROS), 4. 5 parts by weight of titanium oxide, 8 parts by weight of calcium carbonate, 0.5 part by weight of a processing aid (KANEACE PA-20, available from Kaneka Corporation) of a methyl methacrylate-based polymer (a methyl methacrylate-based polymer having a specific viscosity at 30°C of a solution of 0.1 g of the polymer dissolved in 100 ml of chloroform, of less than 0.5), and 6 parts by weight of the while resin powder of the graft copolymer G1 were blended with Henschel mixer to obtain a powder compound.

The powder compound obtained was kneaded at 180°C for 5 minutes using 8-inches test rolls, and pressurized for 15 minutes with a 190°C press to obtain a molded article having a thickness of 3.0 mm. An impact resistance test piece was prepared from the molded article, and Charpy impact strength was measured at a measurement temperature of 23°C according to JIS K-7111. The measurement result of Charpy impact strength is shown in Table 1.

### (Comparative Examples 1 and 2)

Latexes G2 and G3 of the graft copolymer were prepared in the same manner as in Example 1, except for changing the shell composition to the compositions shown in Table 1, and the preparation of while resin powders was tried in the same manner as in Example 1, except for using the latexes G2 and G3 of the graft copolymer.

In the case of using the graft copolymer G2, which was carried out as Comparative Example 1, a while resin powder could be prepared. However, in the case of using the latex G3 of the graft copolymer which was carried out as Comparative Example 2, coagulated latex particles are agglomerated, and as a result, a white resin powder could not be recovered.

A molded article was obtained in the same manner as in Example 1, except for using the while resin powder of the graft copolymer G2 obtained, and Charpy impact strength was measured in the same manner as in Example 1. The measurement result of Charpy impact strength is shown in Table 1.

### (Comparative Example 3)

### <Preparation of core (bc)>

Polymerization up to a first layer of a core (bc) of a graft copolymer G4 was carried out in the same manner as in the polymerization up to the first layer of the core (bc) of the graft copolymer G1 of Example 1.

After stirring for 1 hour in such a state, a mixture comprising 22.54 parts by weight of BA and 0.11 part by weight of AMA as a monomer mixture for second layer, which is a part of monomer mixtures for core, and 0.03 part by weight of cumene hydroperoxide, was added dropwise thereto over 1.5 hours.

After stirring for 1 hour in such a state, a mixture comprising 9.95 parts by weight of MMA and 0.05 part by weight of AMA as a monomer mixture for third layer, which is a part of monomer mixtures for core, and 0.01 part by weight of cumene hydroperoxide, was added dropwise thereto over 0.5 hours.

After stirring for 1 hour in such a state, a mixture comprising 43. 63 parts by weight of BA and 0.22 part by weight of AMA as a monomer mixture for fourth layer, which is a part of monomer mixtures for core, and 0.06 part by weight of cumene hydroperoxide, was added dropwise thereto over 3 hours. Simultaneously, 1 part by weight of sodium laurylsulfate in a form of a 5 wt% aqueous solution was continuously added over 5 hours while adding dropwise the above mixtures.

Stirring was further continued for 1.5 hours, and an acrylate-based rubbery polymer having a volume average particle diameter of 0.14 µm, having four layers structure comprising a first layer having a glass transition temperature of -50°C, a second layer having a glass transition temperature of -54°C, a third layer having a glass transition temperature of 105°C and a fourth layer having a glass transition temperature of -54°C, was obtained as a core (bc).

### <Preparation of shell (bs)>

Preparation of a shell (bs) of the graft copolymer G4 was carried out to the acrylate-based rubbery polymer as a core (bc) of the graft copolymer G4 in the same manner as in the preparation of the shell (bs) of the graft copolymer G1 of Example 1. In this case, the polymerization conversion of monomer components was 99.2%, similar to Example 1. Thus, a latex of the graft copolymer G4 comprising 90% by weight of a core (bc) and 10% by weight of a non-crosslinked shell (bs) was obtained.

### <Preparation of white resin powder of graft copolymer G4>

Preparation of a white resin powder of the graft copolymer G4 was carried out from the latex of the graft copolymer G4 in the same manner as in the preparation of the white resin powder of the graft copolymer G1 of Example 1.

### (Preparation of thermoplastic resin composition, preparation of molded article, and evaluation)

A molded article was obtained using the white resin powder of the graft copolymer G4, and Charpy impact strength was measured, in the same manners as in the preparation of thermoplastic resin composition, the preparation of molded article, and the evaluation in Example 1. The result is shown in Table 1.

Table 1 shows compounding amount (parts by weight) of graft copolymers obtained in Example 1 and Comparative Examples 1, 2 and 3, composition and transition temperature of each layer of cores, a volume average particle diameter, weight ratio of core (bc)/shell (bs), weight proportion of acrylic ester of shells, and Charpy impact strength of molded articles obtained by compounding the respective graft copolymers with a vinyl chloride-based resin and subjecting the resulting respective mixtures to roll-press molding.

**TABLE 1**

| | | | Example 1 | Comparative Example 1 | Comparative Example 2 | Comparative Example 3 |
|---|---|---|---|---|---|---|
| Graft copolymer (B) | | | G1 | G2 | G3 | G4 |
| Compounding amount of graft polymer | | | 6.0 | 6.0 | 6.0 | 6.0 |
| Core (bc) | First layer | Composition | 2-EHA:13.43 AMA: 0.07 | 2-EHA:13.43 AMA:0.07 | 2-EHA:13.43 AMA:0.07 | 2-EHA:13.43 AMA:0.07 |
| | | Tg (°C) | -50 | -50 | -50 | -50 |
| | Second layer | Composition | BA:76.12 AMA: 0.38 | BA:76.12 AMA: 0.38 | BA:76.12 AMA:0.38 | BA:22.54 AMA:0.11 |
| | | Tg (°C) | -54 | -54 | -54 | -54 |
| | Third layer | Composition | | | | MMA:9.95 AMA:0.05 |
| | | Tg (°C) | | | | 105 |
| | Fourth layer | Composition | | | | BA:43.63 AMA: 0.22 |
| | | Tg (°C) | | | | -54 |
| | Particle diameter (µm) | | 0.14 | 0.14 | 0.14 | 0.14 |
| Shell (bs) | Composition | | BA:6.00 MMA:4.00 | BA:0.50 MMA:9.50 | BA:8.50 MMA:1.50 | BA:6.00 MMA:4.00 |
| | Wt% of acrylic ester | | 60 wt% | 5 wt% | 85 wt% | 60 wt% |
| | Tg (°C) | | -10 | 92 | -40 | -10 |
| Core (bc)/shell (bs) weight ratio | | | 90/10 | 90/10 | 90/10 | 90/10 |
| Charpy impact strength (kJ/m²) | | | 117.5 | 86.4 | - | 67.1 |

It is seen from the comparison between Example 1 (acrylic ester in shell: 60%) and Comparative Example 1 (acrylic ester in shell: 5 wt%) that an effect for improving impact resistance is increased when the graft copolymer (B) is fallen within the range defined in the present invention. Furthermore, it is seen from the comparison between Example 1 and Comparative Example 3 that an effect for improving impact resistance becomes poor when a layer having a glass transition temperature of 20°C or higher is introduced into the core.

### (Example 2)

### (Preparation of graft copolymer XG1)

### <Preparation of core (bc)>

Polymerization up to a first layer of a core (bc) of a graft copolymer XG1 was carried out in the same manner as in the polymerization up to the first layer of the core (bc) of the graft copolymer G1 in Example 1.

Polymerization of a second layer of the core (bc) of the graft copolymer XG1 was carried out in the same manner as in the polymerization of the second layer of the core (bc) of the graft copolymer G1 in Example 1, except that 78.11 parts by weight of BA and 0.39 part by weight of AMA were used as a monomer mixture for second layer, which are a part of monomer mixtures for core.

Thus, an acrylate-based rubbery polymer having a volume average particle diameter of 0.14 µm, having two layers comprising a first layer having a glass transition temperature of -50°C and a second layer having a glass transition temperature of -54°C was obtained as the core (bc).

### <Preparation of shell (bs)>

Polymerization of a shell (bs) of the graft copolymer XG1 was carried out in the same manner as in the polymerization of the shell (bs) of the graft copolymer G1 in Example 1, except that 3.20 parts by weight of MMA and 4.80 parts by weight of BA were used as a monomer mixture for non-crosslinked shell to an acrylate-based rubbery polymer as the core (bc) of the graft copolymer XG1. In this case, the polymerization conversion of monomer components was 99.2%. Thus, a latex of the graft copolymer XG1 comprising 92% by weight of the core (bc) and 8% by weight of the non-crosslinked shell (bs) was obtained.

### <Preparation of mixed latex of graft copolymer XG1>

A 1.5 wt% sodium alginate (ALGITEX LL, available from Kimica Corporation) aqueous solution was added to the latex (polymer solid content: 100 parts by weight) of the graft copolymer XG1 such that a sodium alginate solid content is 0.4 part by weight per 100 parts by weight of the solid content of the graft copolymer XG1, followed by stirring and mixing for 3 minutes, thereby preparing a mixed latex of the graft copolymer XG1. Viscosity of the 1.5 wt% sodium alginate aqueous solution at room temperature measured with a B-type viscometer was 120 m·Pa·s.

### <Preparation of white resin powder of graft copolymer XG1>

A white resin powder of the graft copolymer XG1 was prepared from the mixed latex of the graft copolymer XG1 in the same manner as in the preparation of the white resin powder of the graft copolymer G1 in Example 1, except for atomizing the mixed latex of the graft copolymer XG1 at a temperature of 20°C.

### (Preparation of thermoplastic resin composition, preparation of molded article, and evaluation)

A molded article was obtained in the same manner as in Example 1, except for compounding 6 parts by weight of the white resin powder of the graft copolymer XG1 in place of 6 parts by weight of the white resin powder of the graft copolymer G1 in the preparation of a thermoplastic resin composition, the preparation of a molded article, and the evaluation, and Charpy impact strength was measured in the same manner as in Example 1. The result of Charpy impact strength is shown in Table 2.

### (Comparative Examples 4 and 5)

White resin powders were prepared in the same manner as in Example 2, except that latexes XG2 and XG3 of the graft copolymer were prepared in the same manner as in Example 2, except for changing the shell composition of the graft copolymer (B) to compositions shown in Table 2, and the latexes XG2 and XG3 of the graft copolymer were then used.

Molded articles were obtained in the same manner as in Example 2, except for using the obtained white resin powders of the graft copolymers XG2 and XG3, and Charpy impact strength was measured in the same manner as in Example 2. The results of Charpy impact strength are shown in Table 2.

### (Comparative Example 6)

### <Preparation of core (bc)>

Polymerization up to a first layer of a core (bc) of a graft copolymer XG4 was carried out in the same manner as in the polymerization up to the first layer of the core (bc) of the graft copolymer G1 in Example 1.

After stirring for 1 hour in such a state, a mixture comprising 23.53 parts by weight of BA and 0.12 part by weight of AMA as a monomer mixture for second layer, which is a part of monomer mixtures for core, and 0.03 part by weight of cumene hydroperoxide, was added dropwise thereto over 1.5 hours.

After stirring for 1 hour in such a state, a mixture comprising 9.95 parts by weight of MMA and 0.05 part by weight of AMA as a monomer mixture for third layer, which is a part of monomer mixtures for core, and 0.01 part by weight of cumene hydroperoxide, was added dropwise thereto over 0.5 hours.

After stirring for 1 hour in such a state, a mixture comprising 44.63 parts by weight of BA and 0.22 part by weight of AMA as a monomer mixture for fourth layer, which is a part of monomer mixtures for core, and 0.06 part by weight of cumene hydroperoxide, was added dropwise thereto over 3 hours. Simultaneously, 1 part by weight of sodium laurylsulfate in a form of a 5 wt% aqueous solution was continuously added over 5 hours while adding dropwise the above mixtures.

Stirring was further continued for 1.5 hours, and an acrylate-based rubbery polymer having a volume average particle diameter of 0.14 µm, having four layers structure comprising a first layer having a glass transition temperature of -50°C, a second layer having a glass transition temperature of -54°C, a third layer having a glass transition temperature of 105°C and a fourth layer having a glass transition temperature of -54°C, was obtained as a core (bc).

### <Preparation of shell (bs)>

A mixture of 3.20 parts by weight of MMA and 4.80 parts by weight of BA as a monomer mixture for non-crosslinked shell, and 0.01 part by weight of cumene hydroperoxide, was continuously added to the acrylate-based rubbery polymer as a core (bc) of the graft copolymer XG4 at 50°C over 1 hour. After completion of the addition of the mixture, 0.01 part by weight of cumene hydroperoxide was added, and stirring was further continued for 1 hour to complete polymerization of a shell (bs) of the graft copolymer XG1. In this case, the polymerization conversion of monomer components was 99.6%. Thus, a latex of the graft copolymer XG4 comprising 92% by weight of the core (bc) and 8% by weight of the non-crosslinked shell (bs) was obtained.

### <Preparation of mixed latex of graft copolymer XG4>

A mixed latex of the graft copolymer XG4 was prepared from the latex of the graft copolymer XG4 in the same manner as in Example 2.

### <Preparation of white resin powder of graft copolymer XG4>

A white resin powder of the graft copolymer XG4 was prepared from the mixed latex of the graft copolymer XG4 in the same manner as in the preparation of the white resin powder of the graft copolymer G1 in Example 1, except for atomizing the mixed latex of the graft polymer XG4 at a temperature of 20°C.

### (Preparation of thermoplastic resin composition, preparation of molded article, and evaluation)

A molded article was obtained in the same manner as in Example 2, except for using the white resin powder of the graft copolymer XG4, and Charpy impact strength was measured. The result is shown in Table 2.

Table 2 shows compounding amount (parts by weight) of graft copolymers obtained in Example 2 and Comparative Examples 4, 5 and 6, composition and transition temperature of each layer of cores, a volume average particle diameter, weight ratio of core (bc)/shell (bs), weight proportion of acrylic ester of shells, and Charpy impact strength of molded articles obtained by compounding the respective graft copolymers with a vinyl chloride-based resin and subjecting the resulting respective mixtures to roll-press molding.

**TABLE 2**

| | | | Example 2 | Comparative Example 4 | Comparative Example 5 | Comparative Example 6 |
|---|---|---|---|---|---|---|
| Graft copolymer (B) | | | XG1 | XG2 | XG3 | XG4 |
| Compounding amount of graft polymer | | | 6.0 | 6.0 | 6.0 | 6.0 |
| Core (bc) | First layer | Composition | 2-EHA: 13.43 AMA:0.07 | 2-EHA: 13.43 AMA:0.07 | 2-EHA: 13.43 AMA:0.07 | 2-EHA: 13.43 AMA:0.07 |
| | | Tg (°C) | -50 | -50 | -50 | -50 |
| | Second layer | Composition | BA:78.11 AMA:0.39 | BA:78.11 AMA:0.39 | BA:78.11 AMA:0.39 | BA: 23.53 AMA:0.12 |
| | | Tg (°C) | -54 | -54 | -54 | -54 |
| | Third layer | Composition | | | | MMA:9.95 AMA:0.05 |
| | | Tg (°C) | | | | 105 |
| | Fourth layer | Composition | | | | BA:44.63 AMA:0.22 |
| | | Tg (°C) | | | | -54 |
| | Particle diameter (µm) | | 0.14 | 0.14 | 0.14 | 0.14 |
| Shell (bs) | Composition | | BA:4.80 MMA:3.20 | BA:1.60 MMA:6.40 | BA:0.40 MMA:7.60 | BA:4.80 MMA:3.20 |
| | Wt% of acrylic ester | | 60 wt% | 20 wt% | 5 wt% | 60 wt% |
| | Tg (°C) | | -10 | 57 | 92 | -10 |
| Core (bc)/shell (bs) weight ratio | | | 92/8 | 92/8 | 92/8 | 92/8 |
| Aqueous polymer compound (C) | Kind | | Sodium alginate | Sodium alginate | Sodium alginate | Sodium alginate |
| | Amount (part by weight) | | 0.4 | 0.4 | 0.4 | 0.4 |
| Charpy impact strength (kJ/m²) | | | 115.6 | 91.3 | 87.6 | 69.5 |

It is seen from the comparison between Example 2 (acrylic ester in shell: 60 wt%), Comparative Example 4 (acrylic ester in shell: 20 wt%) and Comparative Example 5 (acrylic ester in shell: 5 wt%) that an effect for improving impact resistance is increased when the graft copolymer (B) is fallen within the range defined in the present invention. Furthermore, it is seen from the comparison between Example 2 and Comparative Example 6 that an effect for improving impact resistance becomes poor when a layer having a glass transition temperature of 20°C or higher is introduced into the core (bc).

### (Comparative Example 7)

### <Preparation of core (bc)>

Polymerization up to a first layer of a core (bc) of a graft copolymer YG1 was carried out in the same manner as in the polymerization up to the first layer of the core (bc) of the graft copolymer G1 in Example 1.

Polymerization of a second layer of a core (bc) of the graft copolymer YG1 was carried out in the same manner as in the polymerization of the second layer of the core (bc) of the graft copolymer G1 in Example 1, except that 70.15 parts by weight of BA and 0.35 part by weight of AMA were used as a monomer mixture for second layer, which is a part of monomer mixtures for core.

Thus, an acrylate-based rubbery polymer having a volume average particle diameter of 0.14 µm, having two layers comprising a first layer having a glass transition temperature of -50°C and a second layer having a glass transition temperature of -54°C was obtained as a core (bc).

### <Preparation of shell (bs)>

Polymerization of a shell (bs) of the graft copolymer YG1 was carried out in the same manner as in the polymerization of the shell (bs) of the graft copolymer G1 in Example 1, except that 11.20 parts by weight of MMA and 4.80 parts by weight of BA were used as a monomer mixture for non-crosslinked shell to the acrylate-based rubbery polymer as the core (bc) of the graft copolymer YG1. In this case, the polymerization conversion of monomer components was 98.7%. Thus, a latex of the graft copolymer YG1 comprising 84% by weight of the core (bc) and 16% by weight of the non-crosslinked shell (bs) was obtained.

### <Preparation of mixed latex of graft copolymer YG1>

A mixed latex of the graft copolymer YG1 was prepared from the latex (polymer solid content: 100 parts by weight) of the graft copolymer YG1 in the same manner as in the preparation of the mixed latex of the graft copolymer XG1 in Example 2.

### <Preparation of white resin powder of graft copolymer YG1>

A white resin powder of the graft copolymer YG1 was prepared from the mixed latex of the graft copolymer YG1 in the same manner as in the preparation of the white resin powder of the graft copolymer XG1 in Example 2.

### <Preparation of thermoplastic resin composition, preparation of molded article, and evaluation>

100 parts by weight of a vinyl chloride-based resin (KANEVINYL S-1001, available from Kaneka Corporation, average degree of polymerization: 1,000), 1.0 part by weight a tin-based stabilizer (TM-181FSJ, available from Katsuda Kako K.K.), 1 part by weight of paraffin wax, 1.15 parts by weight of calcium stearate (SC-100, available from Sakai Chemical Industry Co., Ltd.), 0.2 part by weight of polyolefin wax (available from Allied Signal Inc., ACPE-629A), 1 part by weight of titanium oxide, 15 parts by weight of calcium carbonate, 0.8 part by weight of methyl methacrylate-based polymer (KANEACE PA-40, available from Kaneka Corporation), and 2.2 parts by weight of the white resin powder of the graft copolymer YG1 were blended with Henschel mixer to obtain a powder compound.

The powder compound obtained was molded using CTW100P, available from HAAKE, under the following molding conditions, thereby obtaining a sheet of 1 mm.

### (Molding conditions)

| | |
|---|---|
| Feeder rotation speed | 100 rpm |
| Screw rotation speed | 60 rpm |
| TS-E1 | 130°C |
| TS-E2 | 140°C |
| TS-E3 | 150°C |
| TS-D1 | 190°C |

A test piece for Gardner impact strength measurement was prepared from the molded article, and Gardner impact strength was measured at a measurement temperature of 0°C according to ASTM D4226-93. The measurement result of Gardner impact strength is shown in Table 3.

### (Examples 3 and 4)

White resin powders were prepared in the same manner as in Example 2, except that latexes YG2 and YG3 of the graft copolymer were prepared in the same manner as in Comparative Example 7 except for changing the shell composition to the compositions shown in Table 3, and the latexes YG2 and YG3 of the graft copolymer were used.

Molded articles were obtained in the same manner as in Comparative Example 7, except for using the graft copolymers YG2 and YG3 obtained, and Gardner impact strength was measured in the same manner as in Comparative Example 7. The measurement results of Gardner impact strength are shown in Table 3.

Table 3 shows compounding amount (parts by weight) of graft copolymers obtained in Examples 3 and 4 and Comparative Example 7, composition and transition temperature of each layer of cores, a volume average particle diameter, weight ratio of core (bc)/shell (bs), weight proportion of acrylic ester in shells, and Gardner impact strength of molded articles obtained by compounding the respective graft copolymers with a vinyl chloride-based resin and subjecting the resulting respective mixtures to extrusion molding.

**TABLE 3**

| | | | Comparative Example 7 | Example 3 | Example 4 |
|---|---|---|---|---|---|
| Graft copolymer (B) | | | YG1 | YG2 | YG3 |
| Compounding amount of graft polymer | | | 2.2 | 2.2 | 2.2 |
| Core (bc) | First layer | Composition | 2-EHA:13.43 AMA:0.07 | 2-EHA:13.43 AMA:0.07 | 2-EHA:13.43 AMA:0.07 |
| | | Tg (°C) | -50 | -50 | -50 |
| | Second layer | Composition | BA:70.15 AMA:0.35 | BA:70.15 AMA:0.35 | BA:70.15 AMA: 0.35 |
| | | Tg (°C) | -54 | -54 | -54 |
| | Third layer | Composition | | | |
| | | Tg (°C) | | | |
| | Fourth layer | Composition | | | |
| | | Tg (°C) | | | |
| | Particle diameter (µm) | | 0.14 | 0.14 | 0.14 |
| Shell (bs) | Composition | | BA:4.80 MMA:11.20 | BA:9.60 MMA:6.4 | BA:12.80 MMA:3.2 |
| | Wt% of acrylic ester | | 30 wt% | 60 wt% | 80 wt% |
| | Tg (°C) | | 37 | -10 | -34 |
| Core (bc)/shell (bs) weight ratio | | | 84/16 | 84/16 | 84/16 |
| Aqueous polymer compound (C) | | Kind | Sodium alginate | Sodium alginate | Sodium alginate |
| | | Amount (part by weight) | 0.4 | 0.4 | 0.4 |
| Gardner impact strength (in-lbs/mil) | | | 1.20 | 1.32 | 1.41 |

It is seen from the comparison between Comparative Example 7 (acrylic ester in shell: 30 wt%), Example 3 (acrylic ester in shell: 60 wt%) and Example 4 (acrylic ester in shell: 80 wt%) that an effect for improving impact resistance is increased when the graft copolymer (B) is fallen within the range defined in the present invention.

## Claims

1. A thermoplastic resin composition containing 100 parts by weight of a thermoplastic resin (A) and 0.5 to 20 parts by weight of a graft copolymer (B), wherein the graft copolymer (B) consists of 50% to 99.5% by weight of a core (bc) and 0.5% to 50% by weight of a non-crosslinked shell (bs), the core (bc) is constituted of only layer having a glass transition temperature of 20°C or lower, and the non-crosslinked shell (bs) is obtained by polymerizing a monomer mixture for non-crosslinked shell, containing 52% to 100% by weight of an acrylic ester and 0% to 48% by weight of a vinyl monomer copolymerizable with the acrylic ester.

2. The thermoplastic resin composition according to claim 1, wherein the core (bc) is obtained by polymerizing a monomer mixture for core consisting of 45% to 99.9% by weight of a (meth) acrylic ester, 0% to 54.9% by weight of a vinyl monomer copolymerizable with the (meth) acrylic ester, and 0.1% to 10% by weight of a polyfunctional monomer.

3. The thermoplastic resin composition according to claim 1 or 2, wherein the monomer mixture for non-crosslinked shell consists of 52% to 100% by weight of an acrylic ester, and 0% to 48% by weight of a vinyl monomer copolymerizable with the acrylic ester.

4. The thermoplastic resin composition according to any one of claims 1 to 3, wherein the monomer mixture for non-crosslinked shell consists of 52% to 95% by weight of an acrylic ester, and 5% to 48% by weight of a vinyl monomer copolymerizable with the acrylic ester.

5. The thermoplastic resin composition according to any one of claims 1 to 4, further containing an aqueous polymer compound (C) having property to form a physical gel, in an amount of 0.01 to 3.0 parts by weight per 100 parts by weight of the graft copolymer (B).

6. The thermoplastic resin composition according to claim 5, wherein the aqueous polymer compound (C) is one or more selected from hydroxyethylmethyl cellulose, hydroxypropylmethyl cellulose, carboxymethyl cellulose, aqueous alginic acid derivatives, agar, gelatin, carrageenan, glucomannan, pectin, curdlan, gellan gum and polyacrylic acid derivatives.

7. The thermoplastic resin composition according to claim 6, wherein the aqueous polymer compound (C) is aqueous alginic acid derivatives.
